# DEMANDE DE BREVET EUROPEEN

(11) **EP 3 163 343 A1**
(43) Date de publication de la demande: **03.05.2017**
(21) Numéro de dépôt: 16202783.3
(22) Date de dépôt: 17.01.2012
(51) Int. Cl.: G02B 6/42, F21S 8/10

(54) **UNITÉ OPTIQUE POUR DISPOSITIF DE SIGNALISATION ET/OU D'ÉCLAIRAGE**

(30) Priorité: 18.01.2011 FR 1150375
(62) Demande divisionnaire de: 12700293.9
(71) Demandeur: VALEO VISION, 93012 Bobigny Cedex (FR)
(72) Inventeur: BAERT, Christophe, 49460 Montreuil Juigne (FR); DENIS, Sebastien, 49000 ANGERS (FR); SOENEN, Xavier, 49320 VAUCHRETIEN (FR)

(57) **Abrégé**

L'invention concerne une unité optique (1), notamment pour dispositif de signalisation et/ou d'éclairage de véhicule automobile, comportant :
- au moins une source de lumière, notamment une LED,
- au moins une carte (3) portant la source de lumière, cette carte comportant un circuit électrique pour alimenter la source de lumière,
- un guide de lumière (5) réalisé au moins partiellement dans un matériau dans lequel de la lumière peut se propager, ce guide étant agencé recevoir de la lumière provenant de la source de lumière et guider cette lumière,
l'unité optique étant caractérisée par le fait que la carte est portée par le guide de lumière.

## Description

L'invention concerne notamment une unité optique, notamment pour dispositif de signalisation et/ou d'éclairage pour véhicule automobile.

Dans le domaine de l'éclairage et de la signalisation de véhicules automobiles, il est de plus en plus fréquent d'utiliser des guides optiques. Un guide optique est par exemple, très schématiquement, un élément allongé de matière transparente, généralement de section de type cylindrique. A proximité de l'une des extrémités du guide, appelée face d'entrée du guide, est disposée une (ou plusieurs) sources lumineuses, par exemple une source lumineuse de petite taille du type diode électroluminescente: les rayons lumineux émis par cette source se propagent par réflexion totale dans la longueur du guide en direction de son extrémité opposée, appelée face terminale du guide. Une partie des rayons lumineux se propageant dans le guide va en sortir par la face dite face avant du guide grâce à la présence d'éléments réfléchissants disposés sur la face dite face arrière du guide, opposée à la précédente. Ces éléments réfléchissants sont constitués par exemple de prismes. Le guide émet ainsi de la lumière sur toute sa longueur. Il présente l'avantage de pouvoir prendre des formes géométriques très variées, être rectiligne ou courbe, et amener une surface éclairante même dans des zones peu accessibles du projecteur ou du feu du véhicule. Il participe ainsi fortement au style du projecteur ou du feu.

On connaît par exemple par la demande de brevet EP 1 780 463 un tel dispositif d'éclairage à guide optique pour véhicule automobile.

La présente invention a pour objet d'améliorer ce type de dispositif.

L'invention a ainsi pour objet une unité optique, notamment pour dispositif de signalisation et/ou d'éclairage de véhicule automobile, comportant :
- au moins une source de lumière, notamment une LED,
- au moins une carte portant la source de lumière, cette carte comportant un circuit électrique pour alimenter la source de lumière,
- un guide de lumière réalisé au moins partiellement dans un matériau dans lequel de la lumière peut se propager, ce guide étant agencé pour recevoir de la lumière provenant de la source de lumière et guider cette lumière,
   l'unité optique étant notamment caractérisée par le fait que la carte est portée, directement ou indirectement, par le guide de lumière.

Grâce à l'invention, il est possible de positionner précisément la source de lumière par rapport au guide de lumière, ce qui permet d'injecter dans ce guide le maximum de lumière.

De préférence, afin de faciliter les opérations d'assemblage, la carte est solidarisée, directement ou indirectement, au guide de lumière par encliquetage.

Dans un exemple de mise en oeuvre de l'invention, l'unité optique comporte un capuchon fixé, de préférence par encliquetage, au guide de lumière, et agencé pour recevoir la carte.

Le cas échéant, le capuchon est agencé pour être fixé à la carte par encliquetage.

Par exemple, le capuchon comporte au moins une patte d'encliquetage, notamment au moins deux pattes d'encliquetage notamment en regard l'une de l'autre.

Pour permettre un positionnement encore plus précis de la source de lumière par rapport au guide de lumière et faciliter les opérations de montage, le capuchon comporte au moins une patte de positionnement pour la carte, de préférence au moins deux pattes de positionnement notamment en regard l'une de l'autre.

Dans un exemple de mise en oeuvre de l'invention, le capuchon comporte au moins une fente agencée pour recevoir un bord de la carte. Ceci permet le positionnement et le maintien de la carte.

La carte peut, le cas échéant, porter un connecteur électrique relié au circuit électrique de la carte, et le capuchon comporte avantageusement un logement agencé pour recevoir au moins partiellement ce connecteur.

De préférence, le capuchon est agencé pour empêcher une fuite vers l'extérieur de lumière en provenance du guide de lumière et/ou de la source de lumière.

Ces fuites de lumière sont perçues comme inesthétiques au niveau du projecteur ou du véhicule, et sont donc indésirables.

Avantageusement le capuchon comporte un fût entourant au moins partiellement une portion d'extrémité du guide de lumière, le fût permettant d'empêcher des fuites de lumière vers l'extérieur.

Dans un exemple de mise en oeuvre de l'invention, le fût du capuchon entoure la source de lumière.

Par exemple, le guide de lumière comporte un corps principal de forme allongée suivant un axe curviligne prédéterminé, et une patte s'étendant transversalement à cette direction prédéterminée et se raccordant à ce corps.

De préférence, le capuchon comporte une cavité agencée pour recevoir au moins une portion d'extrémité de la patte transversale du guide de lumière.

Dans un exemple de mise en oeuvre de l'invention, le capuchon comporte au moins une patte d'encliquetage agencée pour coopérer avec la patte transversale du guide de lumière, cette patte d'encliquetage étant notamment parallèle au fût précité.

Le fût peut comporter une fente pour le passage de la patte transversale du guide de lumière.

Si on le souhaite, le capuchon est réalisé d'un seul tenant.

Avantageusement le guide de lumière est réalisé d'un seul tenant, y compris avec la patte transversale, laquelle patte correspond notamment à une patte d'injection.

Bien entendu, d'autres configurations sont possibles.

Dans un exemple de mise en oeuvre de l'invention, le guide de lumière comporte deux extrémités longitudinales et chacune de ces extrémités reçoit une source de lumière et une carte, et éventuellement un capuchon tel que précité.

La carte portant la source de lumière est notamment une carte de circuit imprimé.

L'invention a également pour objet un dispositif d'éclairage et/ou de signalisation, notamment pour véhicule automobile, comportant unité optique telle que définie ci-dessus.

Ce dispositif peut par exemple être agencé pour participer à une fonction réglementaire de signalisation, notamment une fonction DRL (feu de jour ou *Daytime Running Light)* ou une fonction de lampe de ville.

L'invention a encore pour objet un procédé pour fixer une source de lumière à un guide de lumière, dans un dispositif d'éclairage et/ou de signalisation d'un véhicule automobile, ce procédé comportant les étapes suivantes :
- fixer la source de lumière sur une carte de circuit imprimé,
- fixer, directement ou indirectement, la carte de circuit imprimé à une extrémité du guide de lumière.

Le procédé peut comporter l'étape suivante :
- interposer un capuchon entre le guide de lumière et la carte.

L'invention pourra être mieux comprise à la lecture de la description détaillée qui va suivre, d'un exemple de mise en oeuvre non limitatif de l'invention, et à l'examen du dessin annexé, sur lequel :
- les figures 1 à 3 illustrent, schématiquement et partiellement, en perspective, l'unité optique selon un exemple de mise en oeuvre de l'invention, suivant différentes vues,
- la figure 4 représente, schématiquement et partiellement, en perspective, l'unité optique des figures 1 à 3, sans la carte de circuit imprimé,
- la figure 5 représente, schématiquement et partiellement, de manière isolée, le guide de lumière de l'unité optique des figures 1 à 4, et
- la figure 6 représente, schématiquement et partiellement, en coupe, l'unité optique des figures 1 à 4.

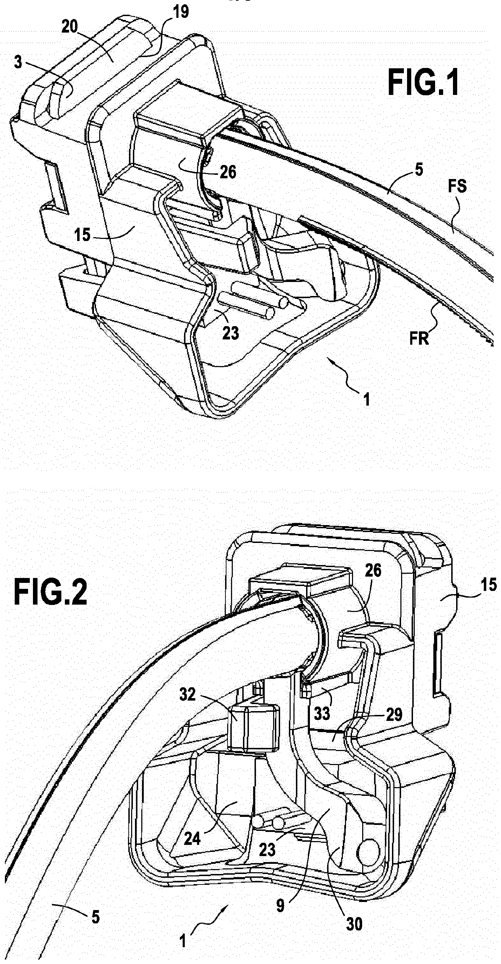

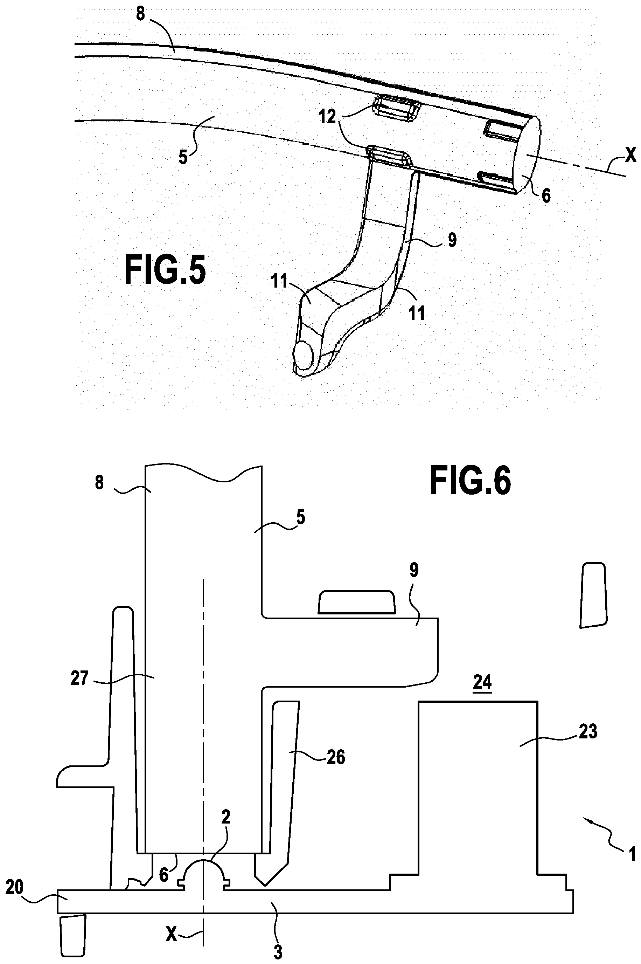

On a représenté, sur les figures 1 à 3 et 6, une unité optique 1 pour un dispositif de signalisation et/ou d'éclairage de véhicule automobile, comportant :
- une source de lumière formée par une LED 2 (visible sur la figure 6),
- une carte 3, globalement plane, portant la source de lumière 2, cette carte 3 comportant un circuit électrique (non représenté) pour alimenter la source de lumière 2,
- un guide de lumière 5 réalisé au moins partiellement dans un matériau dans lequel de la lumière peut se propager, ce guide étant agencé pour recevoir de la lumière provenant de la source de lumière 2 et guider cette lumière.

La carte 3 est portée par le guide de lumière 5, à savoir par exemple lors d'une manipulation (notamment sur une ligne de production), il est possible de procéder à une préhension du guide de lumière tout en ayant la carte solidarisée à ce guide de lumière, de préférence par l'intermédiaire d'un capuchon décrit plus loin.

Dans l'exemple considéré, le guide de lumière 5 présente une section transversale sensiblement circulaire.

Il est bien entendu qu'il peut aussi, dans d'autres modes de réalisation, avoir une section elliptique, carrée, ovale, voire plus complexe, et ce guide de lumière 5 est à base de polymère transparent en polycarbonate (ou polymétacrylate de méthyle PMMA, ou autre polymère approprié).

Le guide de lumière 5 comporte un corps principal 8 de forme allongée galbée suivant un axe curviligne prédéterminé X, et une patte 9 s'étendant transversalement à cette direction prédéterminée X (comme visible sur la figure 5).

En variante, le corps 8 du guide de lumière peut présenter une forme rectiligne.

La patte 9 présente, dans l'exemple décrit, une forme avec deux coudes 11. Cette patte 9 sert de patte d'injection.

Comme on peut le voir sur la figure 5, le corps 8 du guide de lumière 5 comporte également des bossages de positionnement 12 pour le positionnement d'un capuchon décrit plus loin.

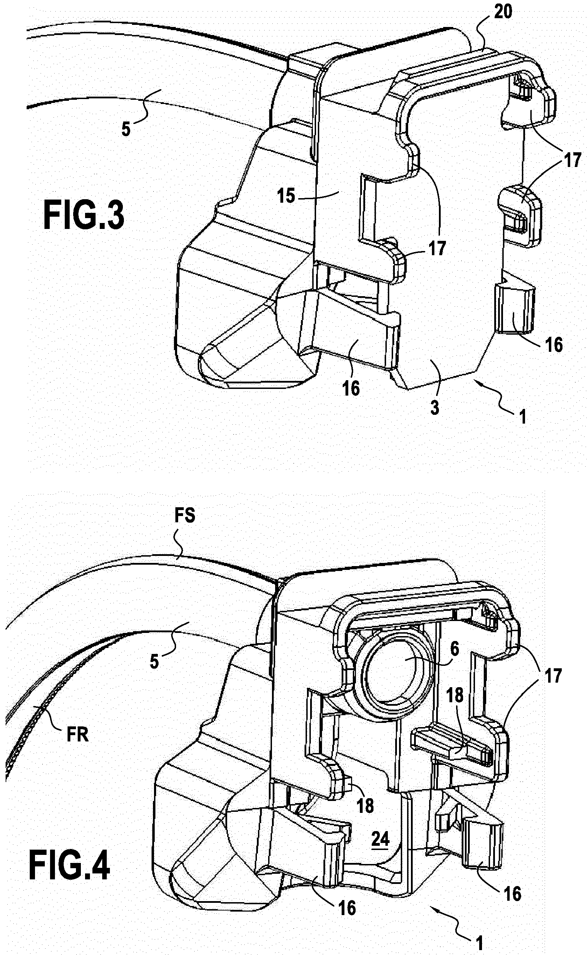

Comme illustré sur les figures 4 à 6, le guide de lumière 5 comprend une facette 6 d'entrée de lumière à l'une des extrémités du corps 8, au regard de laquelle est disposée la diode électroluminescente 2.

Eventuellement, le corps 8 du guide de lumière peut présenter une autre facette d'extrémité, opposée à la facette 6, en regard de laquelle est disposée une autre LED.

Le guide de lumière 5 comporte en outre deux faces principales orientées selon sa longueur suivant l'axe curviligne X :
- une première face FS constituant une face de sortie des rayons lumineux propagés dans le guide 5, cette face de sortie FS peut être lisse et continue, ou bien comporter des stries,
- une deuxième face FR, opposée à la première face FS, constituant une face de réflexion du guide 5, qui est munie d'éléments réfléchissants, par exemple de prismes.

Pour davantage d'explications sur un tel guide de lumière, il est possible de se référer par exemple à la demande de brevet EP 1 780 463.

L'unité optique 1 comporte un capuchon 15 fixé, par encliquetage, au guide de lumière 5, et agencé pour recevoir la carte 3.

A cet effet, le capuchon 15 comporte deux pattes d'encliquetage 16 en regard l'une de l'autre, et venant maintenir en position la carte 3 après le montage (voir figure 3 notamment).

Pour permettre un positionnement encore plus précis de la source de lumière 2 par rapport au guide de lumière 5 et faciliter les opérations de montage, le capuchon 15 comporte des pattes de positionnement 17 contre lesquelles la carte 3 est maintenue.

Le capuchon 15 comporte une pluralité d'appuis 18, au nombre de trois dans l'exemple décrit, sur lesquels repose la carte 3 (voir figure 4).

Le capuchon 15 comporte en outre une fente 19 agencée pour recevoir un bord 20 de la carte 3, en vue d'un positionnement et d'un maintien en position.

Dans l'exemple considéré, l'axe X du corps 8 du guide 5 coupe la carte 3 sensiblement à angle droit (voir figure 6).

La carte 3 porte un connecteur électrique 23 relié au circuit électrique de la carte, et le capuchon 15 comporte un logement 24 agencé pour recevoir au moins partiellement ce connecteur 23.

Le capuchon 15 est agencé pour empêcher une fuite vers l'extérieur de lumière en provenance du guide de lumière 5 et/ou de la source de lumière 2.

A cet effet, le capuchon 15 comporte un fût 26 entourant sensiblement une portion d'extrémité 27 du guide de lumière 5, le fût 26 permettant d'empêcher des fuites de lumière vers l'extérieur, comme représenté notamment sur les figures 1 et 6.

Le fût 26, sensiblement cylindrique, du capuchon entoure également la LED 2.

Par ailleurs, le capuchon 15 comporte une cavité 29 agencée pour recevoir au moins une portion d'extrémité 30 de la patte transversale 9 du guide de lumière 5 (voir figure 2 notamment) pour éviter des fuites de lumière issues de la patte 9.

Le capuchon 15 comporte une patte d'encliquetage 32 agencée pour coopérer avec la patte transversale 9 du guide de lumière, cette patte d'encliquetage 32 s'étendant étant notamment parallèle au fût 26 précité (voir figure 2 notamment).

Le fût 26 comporte une fente 33 pour le passage de la patte transversale 9 du guide de lumière 5.

Le capuchon 15 est réalisé d'un seul tenant, par exemple en matière plastique.

La carte 3 portant la source de lumière est notamment une carte de circuit imprimé.

## Revendications

1. Unité optique (1), notamment pour dispositif de signalisation et/ou d'éclairage de véhicule automobile, comportant :
- au moins une source de lumière (2), notamment une LED,
- au moins une carte (3) portant la source de lumière, cette carte comportant un circuit électrique pour alimenter la source de lumière,
- un guide de lumière (5) réalisé au moins partiellement dans un matériau dans lequel de la lumière peut se propager, ce guide étant agencé pour recevoir de la lumière provenant de la source de lumière et guider cette lumière,
l'unité optique étant **caractérisée par le fait que** la carte est portée par le guide de lumière.

2. Unité selon la revendication précédente, **caractérisée par le fait que** la carte est solidarisée, directement ou indirectement, au guide de lumière par encliquetage.

3. Unité selon l'une des revendications précédentes, **caractérisée par le fait qu'**elle comporte un capuchon (15) fixé, de préférence par encliquetage, au guide de lumière, et agencé pour recevoir la carte.

4. Unité selon la revendication précédente, **caractérisée par le fait que** le capuchon est agencé pour être fixé à la carte par encliquetage.

5. Unité selon la revendication précédente, **caractérisée par le fait que** le capuchon comporte au moins une patte d'encliquetage (16), notamment au moins deux pattes d'encliquetage notamment en regard l'une de l'autre, pour coopérer avec la carte (3).

6. Unité selon l'une des deux revendications précédentes, **caractérisée par le fait que** le capuchon comporte au moins une patte de positionnement (17) pour la carte, de préférence au moins deux pattes de positionnement notamment en regard l'une de l'autre.

7. Unité selon l'une des revendications précédentes, **caractérisée par le fait que** le capuchon (15) est agencé pour empêcher une fuite vers l'extérieur de lumière en provenance du guide de lumière et/ou de la source de lumière.

8. Unité selon la revendication précédente, **caractérisée par le fait que** le capuchon comporte un fût (26) entourant au moins partiellement une portion d'extrémité du guide de lumière.

9. Unité selon la revendication précédente, **caractérisée par le fait que** le fût (26) du capuchon entoure la source de lumière.

10. Unité selon l'une des revendications précédentes, **caractérisée par le fait que** le guide de lumière comporte un corps principal (8) de forme allongée suivant un axe curviligne prédéterminé, et une patte (9) s'étendant transversalement à cette direction prédéterminée.

11. Unité selon la revendication précédente, **caractérisée par le fait que** le capuchon comporte au moins une patte d'encliquetage (32) agencée pour coopérer avec la patte transversale du guide de lumière, cette patte d'encliquetage étant notamment parallèle au fût précité.

12. Unité selon l'une des revendications précédentes, **caractérisée par le fait que** le guide de lumière comporte deux extrémités longitudinales et chacune de ces extrémités reçoit une source de lumière et une carte, et éventuellement un capuchon tel que précité.

13. Dispositif d'éclairage et/ou de signalisation, notamment pour véhicule automobile, **caractérisé par le fait qu'**il comporte une unité optique selon l'une des revendications.

14. Procédé pour fixer une source de lumière à un guide de lumière, dans un dispositif d'éclairage et/ou de signalisation d'un véhicule automobile, ce procédé comportant les étapes suivantes :
- fixer la source de lumière sur une carte de circuit imprimé,
- fixer, directement ou indirectement, la carte de circuit imprimé à une extrémité du guide de lumière.

15. Procédé selon la revendication précédente, **caractérisé par le fait qu'**il comporte l'étape suivante :
- interposer un capuchon entre le guide de lumière et la carte.
